# EUROPEAN PATENT APPLICATION

(11) **EP 2 998 113 A1**
(43) Date of publication of application: **23.03.2016**
(21) Application number: 15176551.8
(22) Date of filing: 13.07.2015
(51) Int. Cl.: B32B 17/10, B32B 37/06, B32B 37/16

(54) **MACHINE FOR HEATING COMPOSITE GLASS SHEETS UNDERGOING A LAMINATION PROCESS, AND METHOD THEREOF**

(30) Priority: 12.09.2014 IT MI20141579
(71) Applicant: Bottero S.p.A., 12100 Cuneo (IT)
(72) Inventor: LORENZI, Andrea, I-12080 Vicoforte (CN) (IT)
(74) Representative: Di Bernardo, Antonio

(57) **Abstract**

The invention relates to a machine (1) for heating composite glass sheets (100) undergoing a lamination process comprising a glass plane (2) comprising a plurality of rollers (4) onto which said composite glass sheets (100) are made to advance; a first upper tank (3) and a second lower tank (5) placed above and below said glass plane (2) respectively, said first upper tank (3) comprising a lower face (7) facing towards said glass plane (2) and said second lower tank (5) comprising an upper face (9) facing towards said glass plane (2); a first upper fan (11) and a second lower fan (13) connected to said first upper tank (3) and to said second lower tank (5) respectively; a first upper intake duct (15) and a second lower intake duct (17) connected to said first upper tank (3) and to said second lower tank (5) respectively; a plurality of first nozzles (6) formed on said lower face (7) of said first upper tank (3) and a plurality of second nozzles (8) formed on said upper face (9) of said second lower tank (5); a plurality of first heating means (10) fixed on related first supports (14) and positioned at said first nozzles (6) and a plurality of second heating means (12) fixed on related second supports (16) and positioned at said second nozzles (8), wherein said first upper tank (3) comprises a first portion (30) and a second portion (31), said first portion (30) being telescopically movable on the outer surface of said fixed second portion (31) of said first upper tank (3) for moving said first upper tank (3), specifically said first telescopically movable portion (30), near to or away from said glass plane (2) depending on the thickness of said composite glass sheets (100); the invention relates also the relevant method for heating composite glass sheets (100) undergoing a lamination process by using said machine (1).

## Description

### TECHNICAL FIELD

The present invention relates to the field of laminating furnaces for producing laminated glass.

More specifically, the present invention relates to a machine for heating composite glass sheets undergoing a lamination process.

Particularly the invention relates to a machine for heating composite glass sheets undergoing a lamination process according to the preamble of claim 1 and a method using said machine.

The invention is preferably and advantageously applied when used in a high-productivity line for laminated glass.

### PRIOR ART

In the field of the production of laminated glass it is known to heat and press at least two glass sheets with each other separated by a film of plastic material; in particular, the machines used for the production of laminated glass provide the glass, after having been suitably washed, to be assembled in a sandwich structure and therefore to be subjected to heating followed by compression.

Such heating and compression operations can be carried out in several subsequent steps and they aim at expelling any residual air that may remain interposed therebetween.

Air trapped between the glass sheet placed above and the plastic material film laid on the glass sheet below would be a production defect and it could even cause the laminated glass to be delaminated.

Therefore it is clear how it is considerably important to accurately carry out heating and compression operations in order to remove any residual air that can remain trapped between glasses and the film of the sandwich structure.

In order to try to overcome the technical drawback mentioned above different solutions have been found that further aim at not being too much energy-consuming such to reduce the production costs without compromising the volumes and quality of the produced laminated glass.

Within a module of a laminating furnace according to the prior art, heating generally is performed by means of heating elements facing the top and the bottom of the glass surface to be treated; thus the composite glass is heated by radiation.

Solutions of such type are described, for example in the documents EP 2 065 181 A1, EP 0 437 913 A1, EP 1 241 143 B1, EP 1 814 726 A4, EP 0 707 950 B1 and EP 2 431 172 B1.

In particular the European patent applications n. EP 2 065 181 A1 and n. EP 0 437 913 A1 show furnaces equipped with heating elements that heat by radiation the composite material undergoing the lamination; said heating elements are mounted on structures that can be height-adjusted with respect to the traveling plane of the composite material such to adjust the relative distance between the assembled glass and the heating elements in order to improve the heating operation.

However such types of technical solutions have the drawback of not providing heating by convection, specifically by air recirculation, and therefore they lead to a considerable thermal dispersion.

The European patent n. EP 1 241 143 B1 shows a furnace where the assembled glass is heated both by radiation and by convection in order to reduce thermal dispersion. However since such solution does not provide the possibility of moving near or away the heating elements, involves a high operating rigidity.

The European patent application EP 1 814 726 A4 describes a laminating furnace where hot air is conveyed through the rolls on which the composite glass travels, said rolls being hollow and having four sectors through which hot air is brought in contact with the glass.

Such solution, however, has the drawback that the glass is cyclically in contact with the hot air flow, and at the same manner it is cyclically in contact with the roll surface, this resulting in a lack of homogeneity in the treatment; moreover since it does not provide the possibility of moving near or away the heating elements, such solution has a considerable operating limit.

The European Patent n. EP 0 707 950 B1 discloses a two-stage laminating furnace, one stage dedicated to the radiation heating and the following one dedicated to the convection heating.

Such solution has several drawbacks, among which the fact that by separating the two heating stages, the length of the furnace is very considerable, and generally its configuration is more complicated, more expensive and more difficult to be managed; moreover the fact of separating the two heating stages causes the heating elements to be doubled and consequently involves higher costs for installation, management and maintenance as well as a lower overall efficiency; moreover by not providing the possibility of moving near or away the heating elements such solution has a considerable operating limit.

The technical solution described in the European patent n. EP 2 431 172 B1 suggests to recirculate air inside the module of the laminating furnace such to heat the composite glass also by convection; such document teaches also how to adjust the relative distance between assembled glass and heating elements such to improve the heating operation.

However such solution has the drawback of requiring a difficult and heavy movement of the structure, with relevant handling and maintenance costs; moreover as a consequence of the movement of the whole structure, a lower thermal insulation is achieved.

In short the known solutions set forth above, although provide to combine the radiation and convection heating modes, also by employing the fact of moving the heat source near to or away from the sandwich structure undergoing the lamination, have the several technical drawbacks mentioned above.

Therefore there is the unsatisfied need of having a laminating furnace for the production of laminated glass that maximizes the removal of residual air trapped between the glass and the plastic film, that minimizes energy dispersion and that is highly flexible, therefore adaptable to any thickness of the sandwich structure to be laminated.

### OBJECTS AND SUMMARY OF THE INVENTION

It is the object of the present invention to overcome the drawbacks of the prior art related to the production of laminated glass.

In particular it is the object of the present invention to provide a machine, and method thereof, for heating composite glass sheets undergoing a lamination process, with a high operating and thermal exchange efficiency and that allow any sandwich structure under lamination to be treated.

These and other objects of the present invention are achieved by a machine and a method for heating composite glass sheets undergoing a lamination process embodying the characteristics of the annexed claims, which are an integral part of the present description.

The present invention relates, possibly independently and autonomously usable with respect to the other aspects of the invention, to a machine for heating composite glass sheets undergoing a lamination process equipped with means for carrying out the simultaneous radiation and convection heating of sandwich structures to be laminated of any thickness, this being possible by the provision of a movable portion of the upper tank of the machine.

The present invention relates, possibly independently and autonomously usable with respect to the other aspects of the invention, to a laminating furnace comprising a plurality of said machines.

The present invention further relates, possibly independently and autonomously usable with respect to the other aspects of the invention, to a method for heating composite glass sheets undergoing a lamination process that provides to simultaneously heat by radiation and by convection sandwich structures to be laminated, said sandwich structures to be laminated having the possibility of being of any thickness due to the possibility of moving a portion of the upper tank of the machine.

Thus all drawbacks related to energy and to a reduced flexibility set forth above are eliminated.

Particularly, advantageously, the technical solution according to the present invention combining convection heating by air recirculation, radiation heating by heating elements and height-adjustable heating elements allows:
- a higher thermal insulation to be achieved since it is not necessary to move the whole structure and, consequently, a higher overall thermal efficiency to be achieved,
- a less hard movement to be achieved since it is limited only to the movable portion of the upper tank of the machine;
- a considerable energy saving to be achieved, by the combination of the two types of heating and also by carrying out the direct heating of the composite glass sheets, and above all, by air recirculation,
- a better quality of the finished product to be achieved, since the composite glass is uniformly heated and possible air pockets are eliminated therefrom in a more efficient manner.

Moreover the idea of providing the machine according to the present invention as a module, that can be combined in series of two or more machines, allows laminating furnaces adaptable to the several operating needs to be produced, while minimizing dimensions and production and management costs.

In one embodiment, the machine and the method according to the invention are used in a high-productivity line for laminated glass.

Further advantageous characteristics will be more clear from the following description of preferred but not exclusive embodiments, provided by way of example and not as a limitation.

### BRIEF DESCRIPTION OF THE DRAWINGS

The invention will be described below with reference to non-limiting examples, provided by way of example and not as a limitation in the annexed drawings. These drawings show different aspects and embodiments of the present invention and, where appropriate, reference numerals showing like structures, components, materials and/or elements in different figures are denoted by like reference numerals.
Fig. 1 is a perspective view of a laminating furnace comprising two modules according to the present invention;
Fig.2 is a longitudinal sectional view of a module of the laminating furnace shown in Fig.1;
Fig.3 is an enlarged view of a detail of fig.2;
Fig.4 is a front perspective view of a module of the laminating furnace shown in fig.1, where the arrangement of the upper tank according to the present invention is well shown comprising two portions (the first telescopically movable one and the second fixed one);
Fig.5 is a perspective view of the telescopically movable portion of the upper tank according to the present invention; and
Fig. 6 is a flow chart of the method according to the present invention.

### DETAILED DESCRIPTION OF THE INVENTION

While the invention is susceptible of various modifications and alternative forms, some preferred embodiments are shown in the drawings and will be described below in detail.

It should be understood, however, that there is no intention to limit the invention to the specific embodiment disclosed, but, on the contrary, the intention of the invention is to cover all modifications, alternative forms and equivalents falling within the scope of the invention as defined in the claims.

Therefore in the description below the use of "for example", "etc", "or" indicates non-exclusive alternatives without limitation unless otherwise defined; the use of "also" means "among which, but not limited to", unless otherwise defined; the use of "includes/comprises" means "includes/comprises, but not limited to," unless otherwise defined.

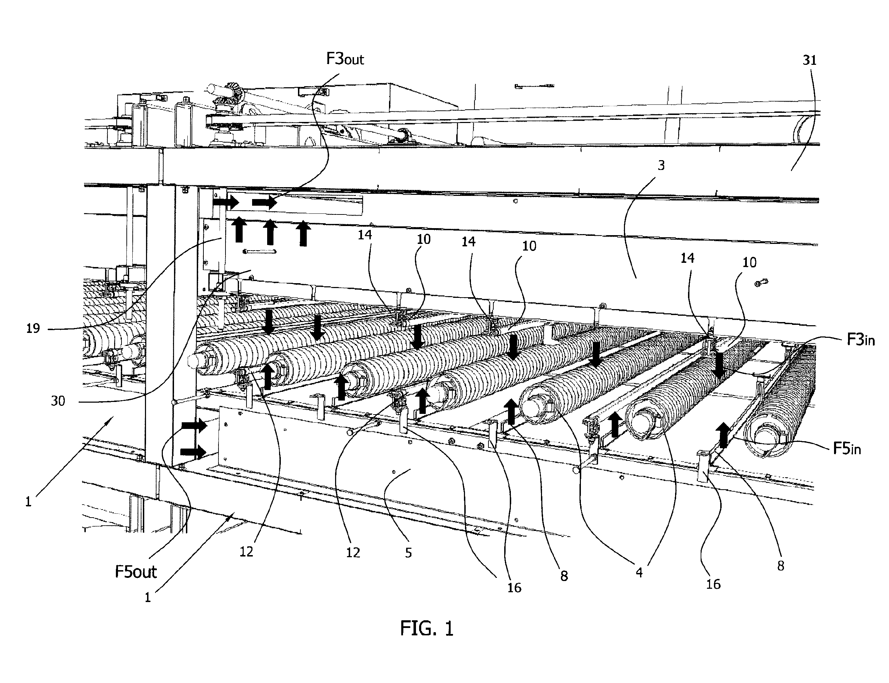

Fig.1 shows the preferred embodiment of the present invention, according to which a laminating furnace for the production of laminated glass comprises at least one module or machine 1 for heating composite glass sheets 100 undergoing a lamination process.

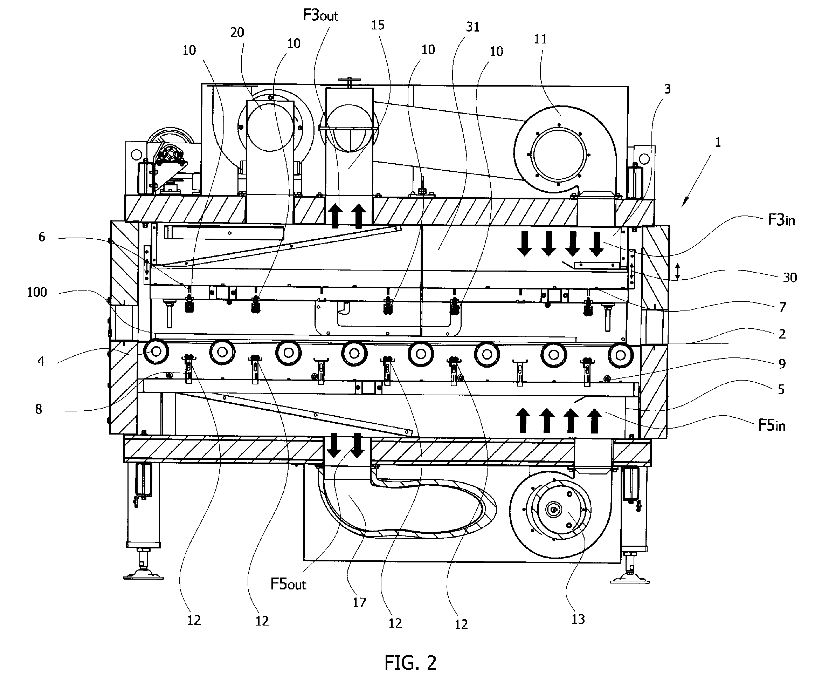

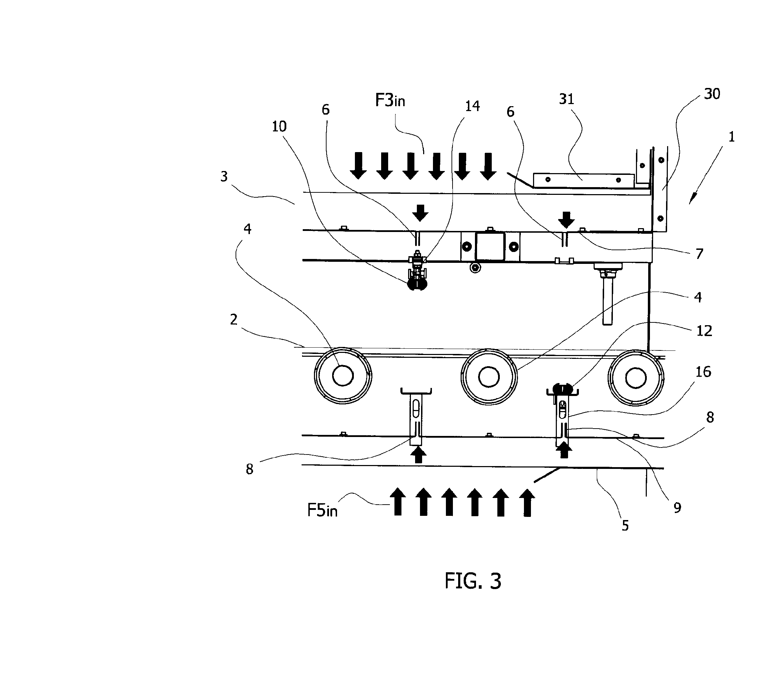

With reference also to Fig.2, wherein a single module of said laminating furnace is visible, and to Fig.3, wherein the system heating said composite glass sheets 100 is shown in details, said machine 1 comprises:
- a glass plane 2 comprising a plurality of rollers 4 on which said composite glass sheets 100 are made to advance, where the term "glass plane" means the traveling plane of said composite glass sheets 100 and, therefore, it is a virtual plane made of said plurality of rollers 4 on which said composite glass sheets 100 physically rest during the travel;
- a first upper tank 3 and a second lower tank 5 placed above and below said glass plane 2 respectively, said first upper tank 3 comprising a lower face 7 facing towards said glass plane 2 and said second lower tank 5 comprising an upper face 9 facing towards said glass plane 2;
- a first upper fan 11 and a second lower fan 13 connected to said first upper tank 3 and to said second lower tank 5 respectively;
- a first upper intake duct 15 of the first upper fan 11 and a second lower intake duct 17 of the second lower fan 13 connected to said first upper tank 3 and to said second lower tank 5 respectively;
- a plurality of first nozzles 6 formed on said lower face 7 of said first upper tank 3 and a plurality of second nozzles 8 formed on said upper face 9 of said second lower tank 5;
- a plurality of first heating means 10 fixed on related first supports 14 and positioned at said first nozzles 6 and a plurality of second heating means 12 fixed on related second supports 16 and positioned at said second nozzles 8,
wherein said first upper tank 3 comprises a first portion 30 telescopically movable on the outer surface of a fixed second portion 31 of said first upper tank 3 for making said first upper tank 3, specifically said first telescopically movable portion 30, to move near to or to move away from said glass plane 2 depending on the thickness of said composite glass sheets 100.

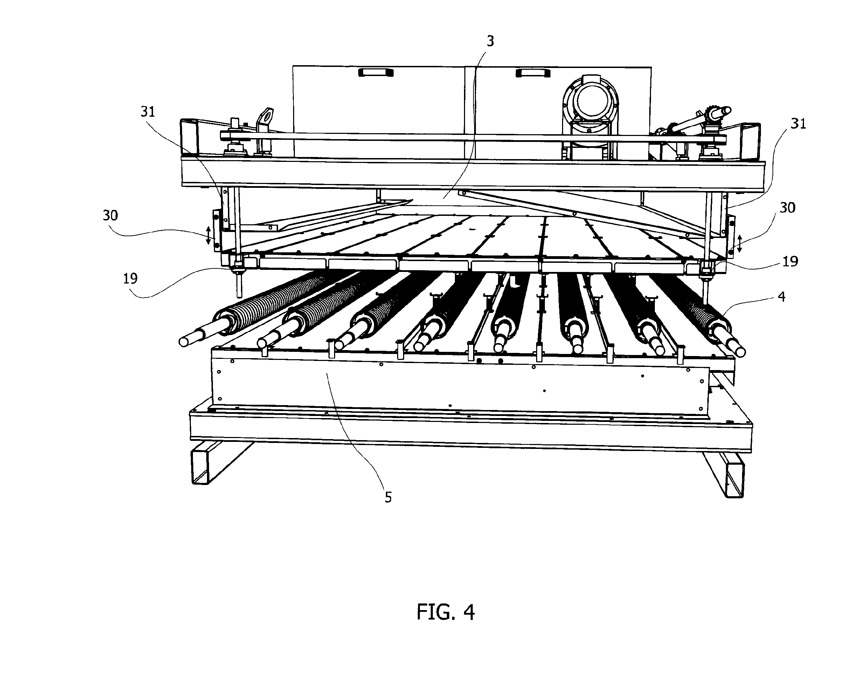

In the present description, the term "telescopically movable" means the situation when said first portion 30 is placed outside said second portion 31 of said first upper tank 31 and is able to slide on the outer surface of said second portion 31 of said first upper tank 3; in fig.4 the arrangement of said first upper tank 3 is clearly shown which comprises said first telescopically movable portion 30 and said second fixed portion 31.

Here it is specified and pointed out that, compared with the known solutions, said telescopically movable arrangement of the first portion 30 with respect to the second fixed portion 31 of said first upper tank 3 allows the distance of the heating elements with respect to said glass plane 2 to be changed with no need of moving all the upper part of the furnace.

In particular, said first telescopically movable portion 30 of said first upper tank 3 comprises said lower face 7 facing said glass plane 2 and said plurality of first nozzles 6 formed on said lower face 7; said second fixed portion 31 of said first upper tank 3 is substantially a frame, open in the lower part and provided with two chambers, one for air entrance connected to said first upper fan 11 and one for the intake of the air connected to said first upper intake duct 15.

For the sake of completeness, it is specified that the second lower tank 5 is fixed and it is not provided with a telescopically movable portion.

Said telescopically movable portion 30 is able to move said first upper tank 3 away from said glass plane 2 by any distance (clearly according to design and operating reasonableness criteria) with respect to said glass plane 2, thus extending the possibility of lamination to a very wide range of composite glasses - in practice, to all the composite glasses of commercial interest.

Moreover, said telescopically movable portion 30 is able to move said first upper tank 3 near said glass plane 2 till even being brought in contact with it, and specifically, with the composite glass to be laminated; it is clear that the minimum distance from the composite glass is determined by the type of glass, that is by its heat resistance properties and by the amount and quality of air pockets therein.

It is useful to specify that the possibility of continuously adjusting the vertical range of said first upper tank 3 allows all the composite glasses of commercial interest to be treated while the important aspect of such characteristic specifically is the ability of reducing the relative distance between the heating elements and the composite glass till moving near the upper surface of the glass at an optimal distance for heating it, said optimal distance depending both on the properties of the composite glass and on the amount and type of heating elements and it being determined according to operating needs that have to be satisfied from time to time.

Said first upper fan 11 and said second lower fan 13 act for blowing air into said first upper tank 3, specifically in said second fixed portion 31 of said first upper tank 3, and into said second lower tank 5 respectively; more precisely, said first upper fan 11, through said first upper tank 3, specifically in said second fixed portion 31 of said first upper tank 3, blows a first entering air flow F3ᵢₙ in said first nozzles 6 and said second lower fan 13, through said second lower tank 5, blows a second entering air flow F5ᵢₙ into said second nozzles 8.

Said first upper fan 11 and said second lower fan 13 provide also to recirculate air; more precisely, said first upper fan 11 draws a first exiting air flow F3ₒᵤₜ through said first intake upper duct 15 and said second lower fan 13 draws a second exiting air flow F5ₒᵤₜ through said second lower intake duct 17, thus obtaining air recirculation within the machine 1.

Said first entering air flow F3ᵢₙ and said second entering air flow F5ᵢₙ are heated by radiation by means of said first heating means 10 and said second heating means 12 respectively and by convection by air recirculation obtained by drawing said first exiting air flow F3ₒᵤₜ and said second exiting air flow F5ₒᵤₜ respectively; that is to say, the air heated by the heating means, once licking the glass plane 2, is drawn upwardly laterally of the furnace and therefore, already heated, is again recirculated. Optionally, but suitably, it is possible to provide an additional fan 20 in connection with said first upper tank 3; said fan 20 serves for the rapid release of heat when emergency situations occur.

Said first nozzles 6 and said second nozzles 8 obtained on the faces of the tanks facing the glass plane 2 respectively (lower side 7 for the upper tank 3 and upper side 9 for the lower tank 5) are substantially continuous longitudinal slots and are configured as nozzles such to accelerate the exiting air flow.

Said first nozzles 6 and said second nozzles 8 are placed in a position perpendicular with respect to said glass plane 2 and parallel to said rollers 4 and have an opening equal to 5 mm.

Said first heating means 10 and said second heating means 12 are placed in a position perpendicular with respect to said glass plane 2 and parallel to said rollers 4; said first heating means 10 and said second heating means 12 are continuous and each one can be individually adjusted such that the energy developed on the whole is proportioned to the heating required for the operation to be carried out, and in particular, to the type of glass to be treated.

Moreover said first heating means 10 and said second heating means 12 can be individually turned on and off such to optimize both the uniform heating of the sheets to be treated and the energy consumption; as the sheets 100 advance on the glass plane 2, it is possible to turn on the heating means that precede said sheets along their advancement direction and to turn off the heating means that follow said sheets along their advancement direction.

It is clear that said first heating means 10 and said second heating means 12 can be turned on and off by pairs or groups, besides individually, depending on the operating needs and depending on the properties of the glass to be treated and of the qualitative requirements desired to be obtained.

Said first heating means 10 and said second heating means 12 are preferably heating elements which are fixed on related first supports 14 and second supports 16 and that are placed at each continuous longitudinal slot or nozzle 6,8 and that heat by radiation the glass sheets 100 and by convection the air flow passing therethrough. Precisely, said air flow, coming out from said nozzles 6 and 8 licks such heating means 10 and 12, it gets heated and it heats the glass 100 by convection.

Said air flow is further heated by convection by recirculation of the air flow.

It has to be noted that it is possible to considerably save energy together with a higher heating uniformity due to the combination of said two types of heating, and above all, to air recirculation, but also due to the fact of directly heating the composite glass sheets, that is by blowing said air flow directly on the heating elements, unlike known solutions, precisely unlike the solution described in EP 2 431 172 B1, where air that has already been in contact with the glass passes on the heating elements in order to get heated and therefore it is circulated again.

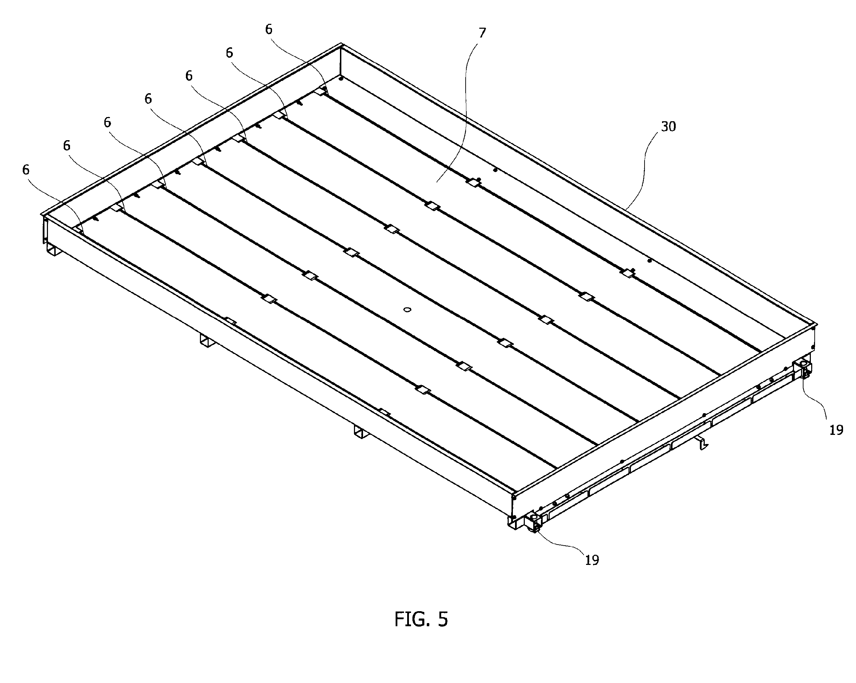

With reference to fig.5 said first nozzles 6 are well visible obtained on said lower face 7 of said first telescopically movable portion 30 of said upper tank 3.

Moreover fig.5 shows the nut screws 19 that allow said telescopically movable portion 30 to move on the outer surface of said second fixed portion 31 of said first upper tank 3 for moving said first upper tank 3 near to or away from said glass plane 2 depending on the thickness of said composite glass sheets 100.

It will be clear for the person skilled in the art that the movement of said telescopically movable portion 30 on the outer surface of said second fixed portion 31 of said first upper tank 3 can be carried out in manners alternative to the nut screws 19, for example by electric cylinders or other solutions intended to carry out such vertical translation movement.

Said first upper tank 3, by means of the telescopic movement with respect to the outer structure of the furnace, can be moved near to or away from the glass plane 2, by being adapted to or arranged for the several thicknesses of the glass sheets that can be treated.

The heating means, since integral with the tanks, during such height-adjustment movement however keep a fixed distance from the air supply slots.

In the embodiment shown herein, the distance of the tank 3 from the glass plane 2 can be manually changed by acting on an adjustment hand-wheel with a worm screw mechanism; however it is clear that the movement/ adjustment operation can also be automated, this being facilitated by the small value of the masses at stake to be moved.

More precisely, the movement of the first upper tank 3 near to or away from the glass plane 2 depending on the thickness of the composite glass sheets 100 can be carried out manually or in an automated manner depending on specific operating needs; in particular it is possible to provide a system that in a completely automatic manner adjusts the distance such that the heating is constantly kept optimal.

Therefore it is clear how the machine 1 according to the present invention is characterized by a high flexibility, allowing treating sandwich structures to be laminated having different thicknesses.

As said above, due to the modularity characterizing the machine 1 of the present invention, it is possible to connect in series two or more modules such to provide a laminating furnace with a length and thermal properties adapted to the specific operating needs.

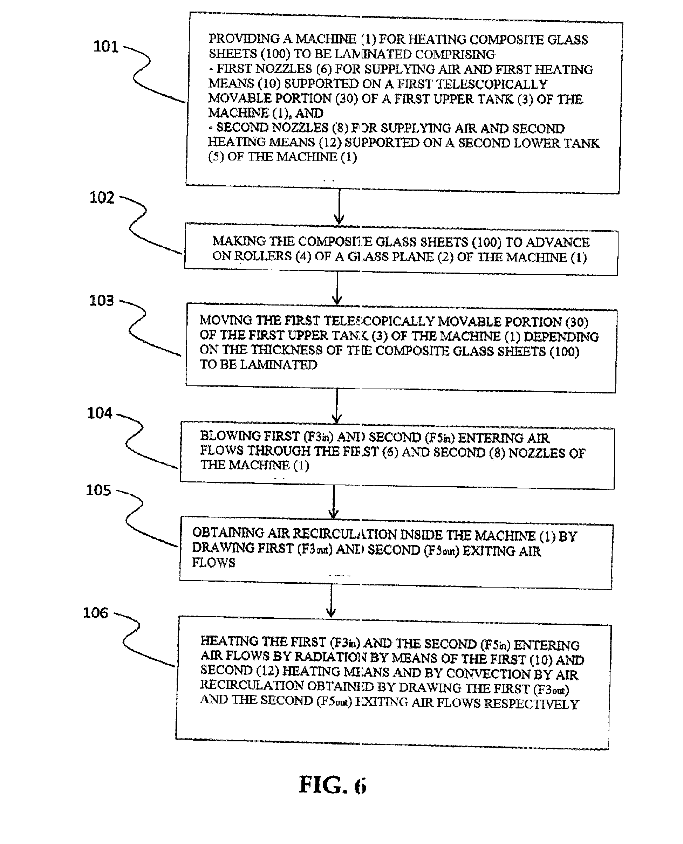

With reference to fig.6, the method for heating composite glass sheets 100 undergoing a lamination process according to the present invention comprises the steps of:
a. providing a machine (1) comprising
   - a glass plane 2 comprising a plurality of rollers 4;
   - a first upper tank 3 and a second lower tank 5 placed above and below said glass plane 2 respectively, said first upper tank 3 comprising a lower face 7 facing towards said glass plane 2 and said second lower tank 5 comprising an upper face 9 facing towards said glass plane 2;
   - a first upper fan 11 and a second lower fan 13 connected to said first upper tank 3 and to said second lower tank 5 respectively;
   - a first upper intake duct 15 of the first upper fan 11 and a second lower intake duct 17 of the second lower fan 13 connected to said first upper tank 3 and to said second lower tank 5 respectively;
   - a plurality of first nozzles 6 formed on said lower face 7 of said first upper tank 3 and a plurality of second nozzles 8 formed on said upper face 9 of said second lower tank 5;
   - a plurality of first heating means 10 fixed on related first supports 14 and positioned at said first nozzles 6 and a plurality of second heating means 12 fixed on related second supports 16 and positioned at said second nozzles 8,
   - wherein said first upper tank 3 comprises a portion 30 telescopically movable on the outer surface of said first upper tank 3 for moving said first upper tank 3 near to or away from said glass plane 2 depending on the thickness of said composite glass sheets 100 (step 101);
b. making said composite glass sheets 100 to advance on said glass plane 2 (step 102);
c. telescopically moving said telescopically movable portion 30 on the outer surface of said first upper tank 3 for moving said first upper tank 3 near to or away from said glass plane 2 depending on the thickness of said composite glass sheets 100 (step 103);
d. blowing a first entering air flow F3 in from said first upper fan 11, through said first upper tank 3 into said first nozzles 6 and a second entering air flow F5ᵢₙ from said second lower fan 13 through said second lower tank 5 into said second nozzles 8 (step 104);
e. drawing, through said first upper intake duct 15, a first exiting air flow F3ₒᵤₜ, and, through said second lower intake duct 17, a second exiting air flow F5ₒᵤₜ, thus obtaining air recirculation inside the machine 1 (step 105);
f. heating said first entering air flow F3 in and said second entering air flow F5ᵢₙ by radiation by said first heating means 10 and said second heating means 12 respectively and by convection by means of the air recirculation obtained by drawing said first exiting air flow F3ₒᵤₜ and said second exiting air flow F5ₒᵤₜ respectively (step 106).

The machine and the method according to the present invention advantageously allow radiation heating to be localized in a specific area of the grid of heating elements by the fact that it is possible to turn on and turn off individually or by pairs or groups said first heating means 10 and said second heating means 12.

As deduced by what set forth above, the innovative technical solution described here allows glass sheets to be heated by radiation and convection and also the distance of the heating elements from the sheet surface to be changed, this resulting in low energy dispersion.

Moreover the constructional modular structure allows production costs of the furnace to be limited, since it is possible to carry out heating stages with variable length by putting two or more modules of standard length side by side.

Finally it is desired to point out that the machine of the present invention has to be used more advantageously in a high-productivity line for laminated glass; in such application the achievement of the desired objects is optimal, namely energy dispersion is considerably reduced.

It is clear from the description above how the machine and the method described allow the above objects to be achieved.

Therefore it is also clear, for a person skilled in the art, that it is possible to make changes and variants to the solution described with reference to figures 1 to 5, without for this reason departing from the teaching of the present patent and from the scope of protection as defined in the annexed claims.

## Claims

1. A machine (1) for heating composite glass sheets (100) undergoing a lamination process, comprising:
- a glass plane (2) comprising a plurality of rollers (4) onto which said composite glass sheets (100) are made to advance;
- a first upper tank (3) and a second lower tank (5) placed above and below said glass plane (2) respectively, said first upper tank (3) comprising a lower face (7) facing towards said glass plane (2) and said second lower tank (5) comprising an upper face (9) facing towards said glass plane (2);
- a first upper fan (11) and a second lower fan (13) connected to said first upper tank (3) and to said second lower tank (5) respectively;
- a first upper intake duct (15) of the first upper fan (11) and a second lower intake duct (17) of the second lower fan (13) connected to said first upper tank (3) and to said second lower tank (5) respectively;
- a plurality of first nozzles (6) formed on said lower face (7) of said first upper tank (3) and a plurality of second nozzles (8) formed on said upper face (9) of said second lower tank (5);
- a plurality of first heating means (10) fixed on related first supports (14) and positioned at said first nozzles (6) and a plurality of second heating means (12) fixed on related second supports (16) and positioned at said second nozzles (8),
**characterized in that**
said first upper tank (3) comprises a first portion (30) telescopically movable on the outer surface of a fixed second portion (31) of said first upper tank (3) for moving said first upper tank (3), specifically said first telescopically movable portion (30), near to or away from said glass plane (2) depending on the thickness of said composite glass sheets (100).

2. A machine (1) according to claim 1, wherein said telescopically movable portion (30) is able to move said first upper tank (3) near to or away from said glass plane (2) by continuously adjusting the vertical movement thereof.

3. A machine (1) according to claim 1 or 2, wherein said first upper tank (3), specifically said first telescopically movable portion (30), is moved near to or away from said glass plane (2) manually or in an automated way.

4. A machine (1) according to any of the preceding claims, wherein said first nozzles (6) and said second nozzles (8) are placed in a perpendicular position with respect to said glass plane (2) and parallel to said rollers (4).

5. A machine (1) according to any of the preceding claims, wherein said first nozzles (6) and said second nozzles (8) are continuous and have an opening equal to 5 mm.

6. A machine (1) according to any of the preceding claims, wherein said first heating means (10) and said second heating means (12) are placed in a perpendicular position with respect to said glass plane (2) and parallel to said rollers (4).

7. A machine (1) according to any of the preceding claims, wherein said first heating means (10) and said second heating means (12) are continuous and individually adjustable.

8. A machine (1) according to any of the preceding claims, wherein said first heating means (10) and said second heating means (12) can be individually turned on and off.

9. A machine (1) according to any of the preceding claims, wherein said first heating means (10) and said second heating means (12) are heating elements.

10. A method for heating composite glass sheets (100) undergoing a lamination process, comprising the following steps:
a. providing a machine (1) comprising
- a glass plane (2) comprising a plurality of rollers (4);
- a first upper tank (3) and a second lower tank (5) placed above and below said glass plane (2) respectively, said first upper tank (3) comprising a lower face (7) facing towards said glass plane (2) and said second lower tank (5) comprising an upper face (9) facing towards said glass plane (2);
- a first upper fan (11) and a second lower fan (13) connected to said first upper tank (3) and to said second lower tank (5) respectively;
- a first upper intake duct (15) of the first upper fan (11) and a second lower intake duct (17) of the second lower fan (13) connected to said first upper tank (3) and to said second lower tank (5) respectively;
- a plurality of first nozzles (6) formed on said lower face (7) of said first upper tank (3) and a plurality of second nozzles (8) formed on said upper face (9) of said second lower tank (5);
- a plurality of first heating means (10) fixed on related first supports (14) and positioned at said first nozzles (6) and a plurality of second heating means (12) fixed on related second supports (16) and positioned at said second nozzles (8),
wherein said first upper tank (3) comprises a first portion (30) telescopically movable on the outer surface of a fixed second portion (31) of said first upper tank (3) for moving said first upper tank (3), specifically said first telescopically movable portion (30), near to or away from said glass plane (2) depending on the thickness of said composite glass sheets (100) (step 101);
b. making said composite glass sheets (100) to advance onto said glass plane (2) (step 102);
c. telescopically moving said first telescopically movable portion (30) on the outer surface of said fixed second portion (31) of said first upper tank (3) for moving said first upper tank (3), specifically said first telescopically movable portion (30), near to or away from said glass plane (2) depending on the thickness of said composite glass sheets (100) (step 103);
d. blowing a first entering air flow (F3ᵢₙ) from said first upper fan (11), through said first upper tank (3), specifically through said fixed second portion (31), into said first nozzles (6) and a second entering air flow (F5ᵢₙ) from said second lower fan (13), through said second lower tank (5), into said second nozzles (8) (step 104);
e. drawing, through said first upper intake duct (15), a first exiting air flow (F3ₒᵤₜ), and, through said second lower intake duct (17), a second exiting air flow (F5ₒᵤₜ), thus obtaining air recirculation inside the machine (1) (step 105);
f. heating said first entering air flow (F3ᵢₙ) and said second entering air flow (F5ᵢₙ) by radiation by said first heating means (10) and said second heating means (12) respectively and by convection by means of air recirculation obtained by drawing said first exiting air flow (F3ₒᵤₜ) and said second exiting air flow (F5ₒᵤₜ) respectively (step 106).
